# EUROPÄISCHE PATENTSCHRIFT

(11) **EP 4 090 929 B1**
(45) Veröffentlichungstag und Bekanntmachung des Hinweises auf die Patenterteilung: **14.02.2024**
(21) Anmeldenummer: 20839363.7
(22) Anmeldetag: 30.12.2020
(51) Int. Cl.: G01M 3/00, G01M 3/20

(54) **PRÜFGASAPPLIKATOR**
TEST GAS APPLICATOR
APPLICATEUR DE GAZ D'ESSAI

(30) Priorität: 15.01.2020 DE 102020100830
(43) Veröffentlichungstag der Anmeldung: 23.11.2022
(73) Patentinhaber: Inficon GmbH, 50968 Köln (DE)
(72) Erfinder: DECKER, Silvio, 50999 Köln (DE)
(74) Vertreter: dompatent von Kreisler Selting Werner - Partnerschaft von Patent- und Rechtsanwälten mbB
(86) Internationale Anmeldenummer: PCT/EP2020/088047
(87) Internationale Veröffentlichungsnummer: WO 2021/144140

(56) Entgegenhaltungen:
- DE-U1-202010 003 426
- US-A- 3 209 579
- US-A1- 2016 146 694
- US-A1- 2016 195 448

## Beschreibung

Die Erfindung betrifft einen Prüfgasapplikator zur Verabreichung von Prüfgas an einen auf Dichtheit zu untersuchenden Prüfling.

In der Vakuumlecksuche werden Prüflinge auf Gasdichtheit untersucht. Dabei ist es bekannt, in die äußere Umgebung des Prüflings ein Prüfgas, wie z.B. Helium oder Wasserstoff, einzubringen, während der Prüfling evakuiert wird und das aus dem Prüfling abgesaugte Gas auf das Vorhandensein von Prüfgas untersucht wird. Wenn in dem aus dem Prüfling abgesaugten Gas Prüfgas enthalten ist, dient dies als Hinweis auf das Vorhandensein eines Lecks.

Bei herkömmlichen Prüfgasapplikatoren wird das Prüfgas typischerweise aus einem Druckbehälter entnommen und mit Hilfe einer Sprühpistole an die äußere Umgebung des Prüflings verabreicht. Nachteilig ist dabei, dass der Prüfgasvorrat unter Druck zu befüllen ist und beim Verabreichen des Prüfgases meist mehr Prüfgas als erforderlich verabreicht wird. Zudem erschwert eine zu große Prüfgaswolke in der Prüflingsumgebung das Lokalisieren eines Lecks.

US 2016/0146694 A1 beschreibt ein Testleck in Form eines Kapilar-Permeations-Lecks.

DE 20 2010 003 426 U1 beschreibt ein Prüfleck mit einer Permeationsmembran.

US 3,209,579 A beschreibt ein Testleck mit einer mehrschichtigen Permeationsmembran.

Der Erfindung liegt die Aufgabe zugrunde, einen verbesserten Prüfgasapplikator bereitzustellen.

Der erfindungsgemäße Prüfgasapplikator ist definiert durch die Merkmale von Anspruch 1.

Demnach wird das Prüfgasvolumen von einem Gehäuse umgeben, welches einen Prüfgasauslass aufweist, der das Prüfgasvolumen mit der das Gehäuse umgebenden Atmosphäre des Prüfgasapplikators verbindet. Der Prüfgasauslass weist ein derartiges Membranmaterial auf, dass das Prüfgas durch das Membranmaterial diffundiert und/oder aus diesem permeiert.

Dadurch kann das Prüfgas aus dem Prüfgasvolumen appliziert werden, ohne dass das Prüfgas in dem Gehäuse gegenüber der äußeren Atmosphäre druckbeaufschlagt ist. Eine aufwändige Druckmindertechnik kann dabei entfallen. Durch das Prinzip der Diffusion/Permeation des Prüfgases strömt eine geringe Menge des Prüfgases kontinuierlich aus dem Prüfgasapplikator, so dass nur in der direkten Umgebung des Prüfgasauslasses die Prüfgaskonzentration erhöht ist. Der Prüfgasapplikator kann an dem Prüfobjekt entlanggeführt werden, um das Leck zu detektieren.

Der Prüfgasauslass kann mit einer Verschlusskappe verschlossen werden.

Das Gehäuse kann zylindrisch nach Art eines Stifts ausgebildet sein, wobei der Prüfgasauslass konzentrisch im Bereich eines distalen Endes des Gehäuses ausgebildet ist. Auf der dem Prüfgasauslass gegenüberliegenden Seite kann ein Befüllventil vorgesehen sein. Das Gehäuse kann beispielsweise im Bereich seiner Mantelfläche ein Überdruckventil aufweisen, um zu gewährleisten, dass das Prüfgas innerhalb des Gehäuses lediglich atmosphärischen Druck aufweist.

Bei dem Prüfgas kann es sich vorteilhafterweise um Helium handeln. Das Membranmaterial ist dazu ausgebildet, dass das Prüfgas hindurch diffundiert, ohne dass ein Druckunterschied zwischen dem Inneren des Gehäuses und der dem Prüfgasapplikator umgebenden Atmosphäre vorherrscht.

Bei dem Membranmaterial kann es sich um ein offenporiges Filzmaterial handeln. Insbesondere kann der Prüfgasapplikator nach Art eines Filzstiftes ausgebildet sein. Prüfgas kann durch Diffusion durch die Poren des Filzmaterials hindurch gelangen.

Bei dem Membranmaterial kann es sich alternativ um ein porenfreies, geschlossenes Material, beispielsweise um ein Silikonmaterial, handeln, durch welches das Prüfgas durch Permeation hindurch gelangen kann.

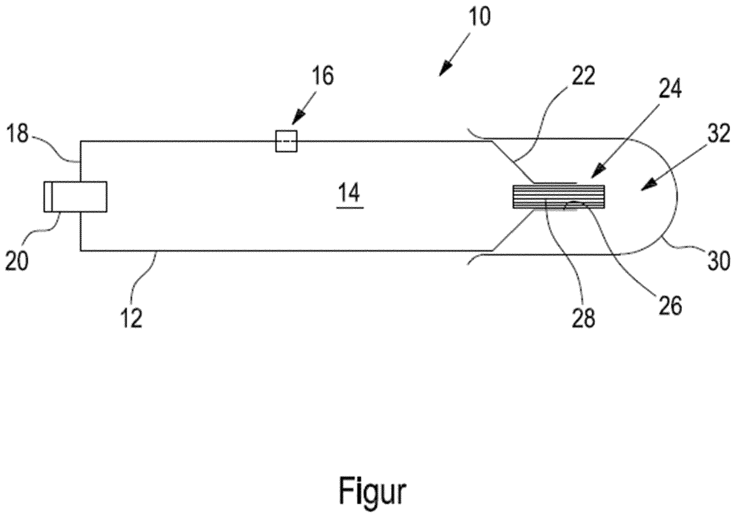

Im Folgenden wird anhand der Figur ein Ausführungsbeispiel der Erfindung näher erläutert.

Die Figur zeigt einen Längsschnitt durch den Prüfgasapplikator.

Der Prüfgasapplikator 10 weist ein zylindrisches Gehäuse 12 auf, welches ein Prüfgasvolumen 14 außen vollständig umgibt. In einer äußeren Mantelfläche des Gehäuses 12 ist ein Überdruckventil 16 ausgebildet, das es ermöglicht, dass bei Befüllen des Prüfgasapplikators 10 mit Prüfgas ein Druck innerhalb des Gehäuses 12 von mehr als 110% von atmosphärischem Druck nicht überschritten wird.

Zum Befüllen des Prüfgasvolumens 14 ist einer rückwärtigen, proximalen Stirnfläche 18 des Gehäuses 12 ein Befüllventil 20 ausgebildet.

Die der proximalen Stirnfläche 18 gegenüberliegende distale Stirnfläche 22 des Gehäuses 12 weist einen Prüfgasauslass 24 in Form einer zylindrischen Öffnung 26 auf. In die zylindrische Öffnung 26 ist ein Membranmaterial 28 eingebracht, welches derart ausgebildet ist, dass das Prüfgas durch das Membranmaterial 28 hindurch diffundiert und/oder aus diesem permeiert. Das Prüfgas tritt ausschließlich durch Diffusion vollständig durch das Membranmaterial 28 hindurch. Ein Druckunterschied an den gegenüberliegenden Seiten des Membranmaterials 28 ist hierzu nicht erforderlich.

Das Membranmaterial 28 ist ein Filzmaterial, welches in Form einer in eine zylindrische Form gepressten Patrone vorliegt.

Eine zylindrische Verschlusskappe 30 ist dazu ausgebildet, auf das distale Ende des Gehäuses 12 derart gasdicht aufgeschoben zu werden, dass kein Prüfgas aus dem Prüfgasvolumen 14 in die äußere Umgebung der Verschlusskappe 30 gelangt.

Das Prüfgasvolumen 14 wird über das Befüllventil 20 mit Prüfgas in Form von Helium befüllt. Das Überdruckventil 16 verhindert dabei, dass der Druck innerhalb des Gehäuses 12 110% des atmosphärischen Drucks in der äußeren Umgebung des Prüfgasapplikators 10 übersteigt. Sobald das Prüfgasvolumen ausreichend befüllt ist, kann zur Einbringung des Prüfgases in die äußere Umgebung des zu untersuchenden Prüflings die Verschlusskappe 30 abgenommen werden, wodurch das Prüfgas aus dem Prüfgasvolumen 14 durch das Membranmaterial 28 und den Prüfgasauslass 24 hindurch diffundiert. Dabei strömt im Vergleich zu herkömmlichen druckbeaufschlagten Prüfgasapplikatoren mit Sprühpistolen lediglich eine geringe Menge von Prüfgas aus dem Prüfgasapplikator 10 aus. Die Spitze 32 des Prüfgasapplikators 10 kann über die Oberfläche des Prüflings hinweggeführt werden, so dass bei Ansteigen des Prüfgasanteils in dem aus dem Prüfling abgesaugten Gas sich die Spitze 32 des Prüfgasapplikators 10 im Bereich des Lecks des Prüflings befindet. Typischerweise zeigt die distale Spitze 32 dann in Richtung auf das Leck. Das Lokalisieren eines Lecks ist dadurch auf besonders einfache Weise möglich.

## Patentansprüche

1. Prüfgasapplikator (10) zur Verabreichung von Prüfgas an ein Prüfobjekt, welches auf das Vorhandensein eines Lecks zu untersuchen ist,
mit einem ein Prüfgasvolumen (14) umgebendes Gehäuse (12), das einen Prüfgasauslass (24) aufweist, der ein Membranmaterial (28) aufweist, durch welches das Prüfgas diffundiert und/oder permeiert,
wobei das Gehäuse (12) langgestreckt und im Wesentlichen zylindrisch ausgebildet ist und der Prüfgasauslass (24) konzentrisch an einem distalen Ende des Gehäuses (12) vorgesehen ist,
wobei der Prüfgasauslass (24) und das Membranmaterial (28) derart ausgebildet sind, dass das Prüfgas ausschließlich durch Diffusion und/oder Permeation aus dem Prüfgasvolumen (14) in die den Prüfgasapplikator (10) umgebende Atmosphäre gefördert wird,
**dadurch gekennzeichnet,**
**dass** der Prüfgasauslass (24) als zylindrische, von dem Membranmaterial (28) vollständig ausgefüllte Öffnung (26) in dem Gehäuse (12) ausgebildet ist.

2. Prüfgasapplikator (10) nach Anspruch 1, **dadurch gekennzeichnet, dass** das Membranmaterial (28) dazu ausgebildet ist, in dem Prüfgasvolumen (14) unter atmosphärischem Druck enthaltenes Gas in die den Prüfgasapplikator (10) umgebende Atmosphäre zu diffundieren oder zu permeieren.

3. Prüfgasapplikator (10) nach einem der vorhergehenden Ansprüche, **dadurch gekennzeichnet, dass** das Membranmaterial (28) ein offenporiges Filzmaterial oder ein porenfreies, geschlossenes Membranmaterial, z.B. ein Silikonmaterial, ist.

4. Prüfgasapplikator (10) nach einem der vorhergehenden Ansprüche, **dadurch gekennzeichnet, dass** das Gehäuse (12) ein Befüllventil (20) aufweist.

5. Prüfgasapplikator (10) nach einem der vorhergehenden Ansprüche, **dadurch gekennzeichnet, dass** das Gehäuse (12) ein Überdruckventil (16) aufweist.

6. Prüfgasapplikator (10) nach einem der vorhergehenden Ansprüche, **dadurch gekennzeichnet, dass** der Prüfgasapplikator (10) eine den Prüfgasauslass (24) im auf das Gehäuse (12) aufgesetzten Zustand vollständig bedeckende und verschließende Sicherheitskappe aufweist.

7. Prüfgasapplikator (10) nach einem der vorhergehenden Ansprüche, **dadurch gekennzeichnet, dass** sich das Membranmaterial (28) von dem Prüfgasauslass (24) in das Prüfgasvolumen (14) hinein erstreckt.

8. Prüfgasapplikator (10) nach einem der vorhergehenden Ansprüche, **dadurch gekennzeichnet, dass** das Prüfgasvolumen (14) ein Prüfgas mit atmosphärischem Druck aufweist.

## Claims

1. A test gas applicator (10) for administering test gas to a test object to be tested for the presence of a leak, comprising a housing (12) surrounding a test gas volume (14) and having a test gas outlet (24) with a membrane material (28) through which the test gas diffuses and/or permeates,
wherein the housing (12) is elongated and substantially cylindrical, and the test gas outlet (24) is concentrically provided at a distal end of the housing (12),
wherein the test gas outlet (24) and the membrane material (28) are configured to convey the test gas solely by diffusion and/or permeation from the test gas volume (14) to the atmosphere surrounding the test gas applicator (10),
**characterized in that**
the test gas outlet (24) is formed as a cylindrical opening (26) in the housing (12) completely filled by the membrane material (28).

2. The test gas applicator (10) according to claim 1, **characterized in that** the membrane material (28) is configured to diffuse or permeate gas contained in the test gas volume (14) at atmospheric pressure into the atmosphere surrounding the test gas applicator (10).

3. The test gas applicator (10) according to any one of the preceding claims, **characterized in that** the membrane material (28) is an open-pored felt material or a pore-free, closed membrane material, e.g. a silicon material.

4. The test gas applicator (10) according to any one of the preceding claims, **characterized in that** the housing (12) comprises a filling valve (20).

5. The test gas applicator (10) according to any one of the preceding claims, **characterized in that** the housing (12) comprises a pressure relief valve (16).

6. The test gas applicator (10) according to any one of the preceding claims, **characterized in that** the test gas applicator (10) comprises a safety cap completely covering and closing the test gas outlet (24) when fitted on the housing (12).

7. The test gas applicator (10) according to any one of the preceding claims, **characterized in that** the membrane material (28) extends from the test gas outlet (24) into the test gas volume (14).

8. The test gas applicator (10) according to any one of the preceding claims, **characterized in that** the test gas volume (14) comprises a test gas with atmospheric pressure.

## Revendications

1. Applicateur de gaz d'essai (10) permettant d'appliquer un gaz d'essai à un objet d'essai devant être examiné quant à la présence d'une fuite,
avec un boîtier (12) entourant un volume de gaz d'essai (14) et comprenant une sortie de gaz d'essai (24) qui comporte un matériau membranaire (28) à travers lequel le gaz d'essai diffuse et/ou pénètre par perméation,
le boîtier (12) étant allongé et essentiellement cylindrique et la sortie de gaz d'essai (24) étant concentrique à une extrémité distale du boîtier (12),
la sortie de gaz d'essai (24) et le matériau membranaire (28) étant conçus de telle manière que le gaz d'essai passe du volume de gaz d'essai (14) à l'atmosphère entourant l'applicateur de gaz d'essai (10) exclusivement par diffusion et/ou perméation,
**caractérisé en ce que**,
la sortie de gaz d'essai (24) est conçue comme une ouverture cylindrique (26) du boîtier (12) qui est complètement remplie par le matériau membranaire (28).

2. Applicateur de gaz d'essai (10) selon la revendication 1, **caractérisé en ce que** le matériau membranaire (28) est conçu pour laisser passer dans l'atmosphère entourant l'applicateur de gaz d'essai (10), par diffusion ou perméation, du gaz contenu sous pression atmosphérique dans le volume de gaz d'essai (14).

3. Applicateur de gaz d'essai (10) selon l'une quelconque des revendications précédentes, **caractérisé en ce que** le matériau membranaire (28) est un matériau de type feutre à pores ouverts ou un matériau membranaire fermé non poreux, par exemple un matériau à base de silicone.

4. Applicateur de gaz d'essai (10) selon l'une quelconque des revendications précédentes, **caractérisé en ce que** le boîtier (12) comprend une valve de remplissage (20).

5. Applicateur de gaz d'essai (10) selon l'une quelconque des revendications précédentes, **caractérisé en ce que** le boîtier (12) comprend une valve de surpression (16).

6. Applicateur de gaz d'essai (10) selon l'une quelconque des revendications précédentes, **caractérisé en ce que** l'applicateur de gaz d'essai (10) comprend un capuchon de sécurité recouvrant et obturant complètement la sortie de gaz d'essai (24) lorsqu'il se trouve à l'état monté sur le boîtier (12).

7. Applicateur de gaz d'essai (10) selon l'une quelconque des revendications précédentes, **caractérisé en ce que** le matériau membranaire (28) s'étend depuis la sortie de gaz d'essai (24) jusque dans le volume de gaz d'essai (14).

8. Applicateur de gaz d'essai (10) selon l'une quelconque des revendications précédentes, **caractérisé en ce que** le volume de gaz d'essai (14) comprend un gaz d'essai à la pression atmosphérique.
